# EUROPÄISCHE PATENTSCHRIFT

(11) **EP 2 643 505 B1**
(45) Veröffentlichungstag und Bekanntmachung des Hinweises auf die Patenterteilung: **25.02.2015**
(21) Anmeldenummer: 10803344.0
(22) Anmeldetag: 25.11.2010
(51) Int. Cl.: D01G 11/02

(54) **VORRICHTUNG ZUM AUFTRENNEN TEXTILER FASERBÜNDEL**
DEVICE FOR UNDOING TEXTILE FIBER BUNDLES
DISPOSITIF DE SEPARATION DE FAISCEAUX DE FIBRES TEXTILES

(43) Veröffentlichungstag der Anmeldung: 02.10.2013
(73) Patentinhaber: Thüringisches Institut Für Textil- Und Kunststoff- Forschung E.V., 07407 Rudolstadt (DE)
(72) Erfinder: LÜTZKENDORF, Renate, 07426 Königsee (DE); ORTLEPP, Gerald, 07407 Uhlstädt-Kirchhasel (DE)
(74) Vertreter: Fritz, Edmund Lothar
(86) Internationale Anmeldenummer: PCT/DE2010/001367
(87) Internationale Veröffentlichungsnummer: WO 2012/069026

(56) Entgegenhaltungen:
- DE-A1- 2 935 168
- US-A- 1 721 086

## Beschreibung

Die Erfindung betrifft eine Vorrichtung, mit der sich textile Faserbündel, bestehend aus n aneinanderhaftenden endlichen Einzelfasern (n= 2,3,4...) mechanisch in Faserbündel mit weniger als n Einzelfasern bis hin zu Einzelfasern aufspalten lassen.

Bei der Verarbeitung von Faserstoffen ist es von großer Bedeutung, diese ab einer bestimmten Verarbeitungsstufe stark vereinzelt oder nur als dünne bzw. feinere Restfaserbündel vorliegen zu haben.

Im Ausgangsmaterial liegen Faserstoffe jedoch oft nur in Form von Faserbündeln vor bzw. es sind im Ausgangsmaterial hohe Anteile darin enthalten. Dies können einerseits Schnittfaserbündel im Längenbereich von 3 bis 100 mm, technisch aufgeschlossene Naturfasern oder textilartige Produkte wie Fasergewebe, Fasergelege und Fasergeflechte auf Basis von Multifilament- oder Stapelfasergarnen sein, aus denen Einzelfasern gewonnen werden sollen.

Für solche bündeltrennenden Prozesse werden heute materialspezifisch eine Vielzahl unterschiedlicher Techniken angewandt. Dies sind in der Regel textile Öffner, Reißanlagen, Krempeln oder Karden. Sie sind vom Anlagenaufwand sehr hoch und können nur für bestimmte faserbündelhaltige Materialien, mitunter nur unter Inkaufnahme von Fasereinkürzungen, mechanischen Schädigungen oder nur geringen Faserbündel spaltenden Effekten, eingesetzt werden. Oft ist es für einen ausreichenden Effekt notwendig mehrere Anlagen nacheinander mit dem Material zu durchlaufen. Textile Öffner, Krempeln und Karden funktionieren bei Faserbündeln der Längen von etwa 30 - 100 mm nur unter der Voraussetzung, dass die Fasern eine Kräuselung aufweisen. Reißanlagen werden für Gelege, Gewebe und Geflechte in stückiger Form eingesetzt. Für Kurzfaserschnittbündel bei den üblichen Bündellängen von 3 bis 12 mm als auch generell für glatte Faserbündel ohne Faserkräuselung ist keine Vorrichtung zu einer effizienten Faserbündelauflösung bzw. Faserbündelspaltung bekannt.

Naturfaserbündel werden durch Kämmprozesse auf Spezialmaschinen verfeinert oder müssen chemisch aufgeschlossen werden.

Nachteile dieser Methoden sind:
- hoher technischer und energetischer Aufwand
- eingeschränkte Universalität bezüglich des Materialeinsatzes
- hohe mechanische Schädigung und starke Fasereinkürzung insbesondere bei Reißanlagen.
- Nichteignung für glatte Faserbündel sowie alle Kurzfaserbündel Merkmal all dieser mechanischen Verfahren ist, dass das zu zerfasernde Material mittels mit Stiften oder Zähnen bestückter Walzen bearbeitet wird, wobei entweder verschiedene Walzen gegeneinander kämmend arbeiten oder eine Walze das Material aus einer festen Materialklemmstelle herausreißt.

Bekannt ist eine Vorrichtung zum Auftrennen von Geweben in die Fadenkomponenten nach DE 199 00 770 A1, mit der solche bündelspaltenden Effekte als zufälliger Nebeneffekt sporadisch erzeugt werden können. Diese in DE 199 00 770 A1 beschriebene Vorrichtung ist nur für Anwendung im Bereich des Textilrecyclings und hier speziell nur für das Überführen von flächigen Gewebestücken in ihre Garnbestandteile nutzbar. Es werden hier als Ausgangsmaterial ausschließlich Gewebe eingesetzt, wobei das Hauptziel der beschriebenen Vorrichtung darin besteht, die in den Geweben vorliegende in einer Gewebebindung definiert vorgenommene rechtwinklige Fadenverkreuzung und -verflechtung zwischen den Kett- und Schussfäden zwecks Rückgewinnung dieser Fäden zu zerstören. Lt. DE 199 00 770 A1 kommt es in wenigen Fällen bei Geweben aus Filamentgarnen dabei gleichzeitig zu einer Auftrennung von Filamentgarnabschnitten bis zur Einzelfaser. Dies ist ein zufälliger nur in seltenen Fällen auftretender Nebeneffekt, der jedoch für eine wirtschaftliche Verwertung des Effektes nicht ausreicht. Nur der Einsatz dieser beschriebenen Vorrichtung wäre für eine Zerfaserung bis zu den Einzelfasern nicht ausreichend. Es müssen dazu weitere zusätzlich nachfolgende mechanische Prozessschritte entsprechend Anspruch 9 in DE 199 00 770 A1 hinzugezogen werden.

US-A-1,721,086 und DE 29,35,168-A1 zeigen bekannte Vorrichtungen.

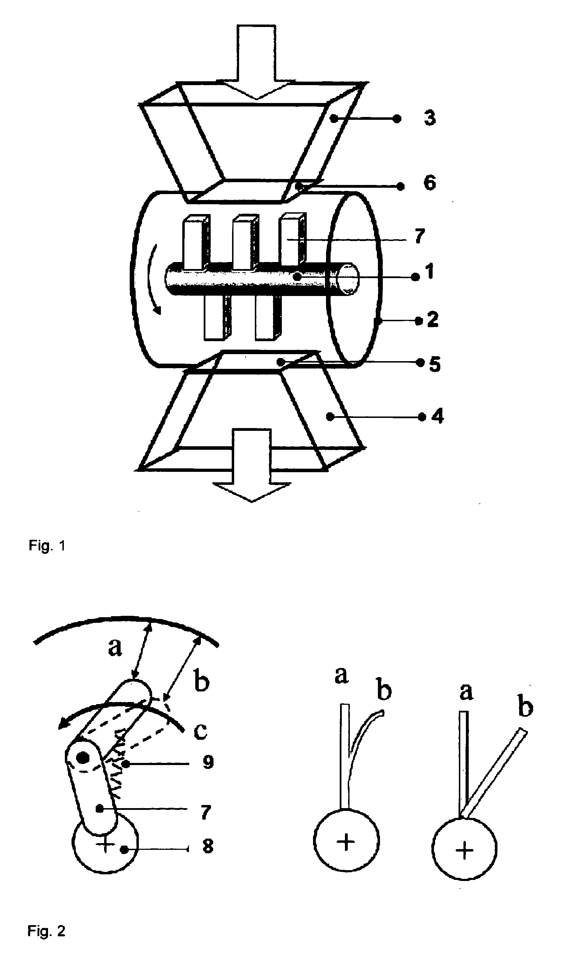

Die Aufgabe der vorliegenden Erfindung ist es daher, mittels einer universell einsetzbaren Vorrichtung Faserbündel sehr schonend längs zu spalten, um Einzelfasern, feinere Faserbündel oder ein Gemisch aus Einzelfasern und feineren Faserbündeln zu erhalten. Erfindungsgemäß erfolgt die Lösung der vorliegenden Aufgabe mittels einer modifizierten Mühle, wie beispielgebend in Fig. 1 dargestellt, bei der die beschriebene Vorrichtung im Unterschied zur Vorrichtung aus DE 199 00 770 A1 in der Lage ist, ohne zusätzliche Nachfolgeprozesse Einzelfasern materialschonend aus Faserbündeln zu gewinnen, in dem der Effekt der Längsspaltung der Faserbündel durch konstruktive Änderungen wesentlich erhöht und gleichzeitig die Materialschonung sichergestellt wird. Die Lösungerfolgt gemäß Anspruch 1.

Die Erfindung soll nachstehend beispielhaft und anhand einer vereinfachten Schnittdarstellung in Fig. 1 und 2 näher erläutert werden. Das textile Ausgangsmaterial mit einer Faserbündellänge von 1 bis 200 mm wird chargenweise oder kontinuierlich in die Materialbevorratung 3 eingetragen. Die zugeführte Materialmenge ist abhängig von der Materialart und der konstruktiven Auslegung des Mahl- oder Statorraumes 2 in Kombination mit den propellerartigen Schlagflügeln bzw. einem Schlagwerk 1. Das Schlagwerk 1 besitzt vorzugsweise mehrfach ausgeführte auf einer Antriebsachse 8 nebeneinander angeordnete propellerartige gleichgestaltete flügelartige Schlagelemente 7.

Wichtig ist für eine Materialschonung und einen hohen Bündelspaltungseffekt das nichtschneidend arbeitende Schlagwerk in Kombination mit einem Totraumvolumen von mindesten 10%, das von den rotierenden Schlagelementen nicht überstrichen wird. Eine hier nicht dargestellte Antriebseinheit treibt das Schlagwerk 1 mit in der Regel gleichbleibender, vorzugsweise entsprechend des Materials wählbaren Umdrehungszahl von mindestens 200/min an.

Bei einer kontinuierlichen Materialzufuhr wird über einen zeitgesteuerten Klappenmechanismus 6 die zu bearbeitende Materialcharge unter Nutzung der Schwerkraft in definierten Zeitintervallen in den Mahlraum eingespeist, wobei vor der Einspeisung stets die vorangegangene Materialcharge aus dem Behandlungsraum über den Materialaustrag 4 und einen zeitgesteuerten Klappenmechanismus 5 herausgeschleust wurde. Die materialzu- bzw. abführenden Klappen können perforiert oder als Siebboden ausgeführt sein.

Das durch Schwerkraft oder auch pneumatisch durch die Zone der rotierenden Schlagflügel bewegte Fasermaterial wird schlagend bearbeitet. Die zugegebenen Faserbündel, deren Fasern durch Adhäsion, Kohäsion und/oder Verdrillen oder auch durch die Einbindung in eine textile Fläche zusammenhalten, werden dabei zerfasert und zu Faserbündeln mit weniger Einzelfasern bis hin zu Einzelfasern zerlegt, so dass einzelne Wirrfasern oder Haufwerke im Durchmesser kleinerer Bündel nach Abschluss einer definierten, materialspezifisch konstanten Behandlungszeit über den Entnahmebereich 4 mit öffenbarer Austragsklappe 5 ausgeschleust werden kann.

Die Statorwand kann je nach Material unterschiedlich rauh ausgelegt bzw. mit in den Totraum hineinragenden Stauelementen versehen sein. Für eine schonende Materialbehandlung sollten die Schlagelemente Kraftspitzen abbauen können, indem sie beispielsweise unter der Einwirkung solcher Kräfte entgegen der Drehrichtung abkippen und damit kurzzeitig mehr Totraumvolumen für zufällige Materialanhäufungen freigegeben und danach wieder in ihre Ausgangsposition zurückfedern.

In Fig. 2 sind beispielgebend 2 solcher prinzipieller Konstruktionen der Realisierung eines lastgesteuerten Totraumvolumens über eine elastische rückfedernde Schlagflügelauslegung dargestellt. Die erste Abbildung in Fig. 2 zeigt einen 2-geteilten Schlagflügel 7, der über die Antriebswelle 8 in Pfeilrichtung c rotiert. Ein Druckfedermechanismus wirkt zusätzlich in Richtung der Zentrifugalkraft und sichert einen Abstand a zur Statorwand.

Im Fall von Belastungsspitzen durch zufällige Materialanhäufungen klappt der ober Teil des Schlagflügels entgegen der Drehrichtung und vergrößert so den Abstand zur Statorwand auf den Betrag b, wodurch kurzzeitig zusätzliches lokales Totraumvolumen zur Reduzierung der auf das Material einwirkende mechanischen Lastspitze freigegeben wird. Nach der Lastspitze federt das Flügelelement wieder in seine Ausgangsposition zurück. Bei ausreichender Masse des klappbar gestalteten Flügelteils und hohen Umfangsgeschwindigkeiten kann das Federelement 9 auch weggelassen werden und die Rückstellkraft allein durch die Zentrifugalkraft sichergestellt werden.

Die beiden anderen Darstellungen zeigen 2 Prinzipien ungeteilter Behandlungsflügel, die materialseitig so elastisch ausgelegt sind, dass sie bei Belastungsspitzen entgegen der Drehrichtung zu großen Materialanhäufungen kurzzeitig ausweichen können und so lastreduzierendes zusätzliches Totraumvolumen im Behandlungsraum freigeben.

Nach der faserbündelspaltenden Behandlung wird das Material über einen Materialaustrag 4 (Fig.1) aus dem Behandlungsraum ausgeschleust. Hierzu wird zeitgesteuert die Materialaustragsklappe 5 kurzzeitig geöffnet. Die Schlagflügel rotieren dabei weiter und generieren durch die Materialrotation eine den Materialaustrag sicherstellende Austragskraft. Der Materialaustrag kann in einen Vorratsbehälter oder in eine angeflanschte, pneumatisch besaugte Materialtransportleitung erfolgen.

Das zur Bearbeitung verwendete Material befindet sich in der Regel im trockenen Zustand, kann aber auch eine Feuchte bis zu 50% aufweisen. Zwecks Verbesserung der Reib- und Gleiteigenschaften oder der Verminderung der elektrostatischen Aufladung der Fasern können diese durch eine entsprechende Präparation auch vorbehandelt sein.

Um eine wirtschaftlich verwertbare, faserbündelspaltende Wirkung zu erreichen, muss die Vorrichtung in einem jeweils an das Material angepassten Technologiefenster arbeiten. Dabei gilt es, gleichzeitig das Material sehr schonend zu bearbeiten, damit möglichst nur längs gespalten und nicht quer zerrissen, durchgeschert, angebrochen oder mechanisch die Faserstoffe so geschädigt werden, dass deren Zugfestigkeiten oder Zug-E-Modul reduziert werden. Hierfür ist es notwendig, in Vorversuchen optimale Fenster bezüglich der Behandlungsparameter der Materialmenge je Behandlungscharge und Behandlungszeit sowie der technischen Auslegung der Vorrichtung zu ermitteln.

Um diese Anpassbarkeit an verschiedene Materialien bzw. gegebene Materialschwankungen sicherzustellen, sollte die Vorrichtung vorzugsweise folgende charakteristische Merkmale aufweisen:
- diskontinuierlicher Chargenbetrieb mit Wählbarkeit der bündelaufspaltenden Behandlungszeit,
- Wählbarkeit der Drehzahl der Propellerflügel,
- Einstellbarkeit des Totraumvolumens über wechselbare Schlagflügelgeometrien im Verhältnis zum Stator,
- lastabhängige Freigabe zusätzlichen Totraumes während der Materialbehandlung
- wechselbare Schlagrotoren mit unterschiedlicher Lastempfindlichkeit zur kurzzeitigen Freigabe zusätzlicher Totraumvolumina
- variabel austauschbare Statorinnenverkleidungen bezüglich der Rauhigkeit und zusätzlicher Stauelemente, die in den Totraumbereich hineinragen.

Die Vorrichtung ist geeignet, um besonders faserschonend bezüglich der Faserlängenreduzierung und des Abbaus mechanischer Kennwerte eine breite Vielfalt von faserbündeligen Gütern aus den Bereichen Kurzschnittfasern, gekräuselte und ungekräuselte Stapelfasern, Naturfasern mit natürlich gegebener Faserbündelstruktur wie Flachs, Hanf und Nessel, stückige Gelege, Gewebe-, Geflecht- und Seil-und Gurtababschnitte in bündelärmere einzelfaserhaltigere Provenienzen für die unterschiedlichsten Anwendungen im Bereich der textilen Weiterverarbeitung oder den Einsatz in faserverstärkte Kunstoffen, Gummi und Elastomeren aufzuarbeiten.

Die erfindungsgemäße Vorrichtung eignet sich zur Zerfaserung unterschiedlichster textiler faserbündelhaltiger Materialien, wie die Ausführungsbeispiele 1 bis 3 zeigen.

### Ausführungsbeispiel 1

250g auf 40 mm geschnittene Para-Aramidfilamentgarne der Feinheit 336 tex wurden 15s in einer Vorrichtung entsprechend Fig. 1 bei Einsatz eines Siebbodens mit einer Lochweite von 5 mm behandelt. Der Rotor mit 4 x 8 nebeneinander angeordneten Schlagflügeln rotierte mit 1000/min. Als besonders schonende Flügelvariante wurde die in Fig. 2 dargestellte zweigeteilte Klappvariante eingesetzt, wobei aufgrund der hohen Umfangsgeschwindigkeit auf ein zusätzlich rückstellendes Federelement verzichtet werden konnte. Das Totraumvolumen betrug 40%. Es resultierte eine Wirre aus Einzelfasern und gespaltenen Faserbündeln, die danach bei der Herstellung eines gekrempelten Nadelvlieses im Vergleich zu unbehandelten Filamentgamstücken zu einem gleichmäßigeren Vliesstoff verarbeitet werden konnten. Zur Materialbeschickung wurde die Befüllungsklappe nach Befüllung des Materialbevorratungsraumes 2 s geöffnet und nach Beendigung des Behandlungsprozesses die Materialaustragsklappe ebenfalls 2 s für eine vollständige Entleerung des Behandlungsraumes in eine pneumatische Absaugleitung geöffnet.

### Ausführungsbeispiel 2

Basaltfaserbündel einer Länge von 50mm und einer Einzelmasse von 0,00537g lagen als Schüttgut mit einer Schüttdichte von 200kg/m³ vor. Dieses Material wurde in Chargen zu je 300g 12s mit einer Vorrichtung entsprechend Fig. 1 bei Einsatz eines Siebbodens mit einer Lochweite von 5 mm behandelt. Im Unterschied zu Ausführungsbeispiel 1 wurde hier mit einer reduzierten Flügelanzahl 60% Totraumvolumen eingestellt. Als Flügeldrehzahl wurden 750/min angewandt. Es resultierte eine Wirre aus Einzelfasern und gespaltenen Faserbündeln mit einer Schüttdichte von 26 kg/m³. Diese Materialauflockerung resultierte aus dem Längsspalten der Faserbündel in Teilbündel und Einzelfasern.

### Ausführungsbeispiel 3

300g unter Verwendung eines mit einem Glasfadensystem vernähter Carbon-UD Gelegestücke in flächiger Form von etwa 16 cm² bis 25 cm², bei maximalen Kantenlängen < 8 cm und einer Flächenmasse von 650 g/m² wurden mit einer Vorrichtung entsprechend Fig. 1 6 s mit einer Flügeldrehzahl von 1200/min behandelt. Zum Einsatz kamen ebenfalls die Knickflügel aus Fig. 2 ohne zusätzliches Rückfederelement. Das Totraumvolumen wurde mit 50% ausgelegt. Zur Erhöhung des Trenneffektes auf die Faserbündel wurden über den Umfang des Statorgehäuses vier 5 mm weit in den Totraum hineinragende parallel zur Drehachse der Schlagflügel im gleichen Abstand zueinander angeordnete Stauelemente angebracht. Diese Stauelemente besaßen eine kubische Form und entsprachen in ihrer Länge der Breite des Mahlraumes. Es resultierte ein wirres Gemenge aus einzelnen Carbonfasern und Carbonfaserbündeln bestehend aus einer unterschiedlichen Anzahl von Einzelfasern, vermengt mit Faden- und Faserstücken der Nähfäden.

### Bezugszeichenliste

Fig. 1
- 1: Schlagwerk
- 2: Mahl- oder Statorraum
- 3: Materialbevorratung
- 4: Materialaustrag/Entnahmebereich
- 5: Klappenmechanismus Materialaustrag/Austragsklappe
- 6: Klappenmechanismus Materialzufuhr
- 7: Schlagelement/Schlagflügel

Fig. 2
- 7: Schlagelement/Schlagflügel
- 8: Antriebswelle
- 9: Druckfedermechanismus
- a: Abstand zur Statorwand
- b: vergrößerter Abstand zur Statorwand
- c: Rotationsrichtung

## Patentansprüche

1. Vorrichtung zum mechanischen Aufspalten endlicher textiler Faserbündel, bestehend aus n Einzelfasern (n ≥2) in Faserbündel mit weniger als n Einzelfasern und/oder Einzelfasern,
bei der in einem nach außen abgeschlossenen Mahlraum, der einen oder mehrere Toträume von mindesten 10% des Mahlraumvolumens aufweist und in dem ein oder mehrere rotierende Schlagwerke nichtschneidend, Belastungsspitzen reduzierend mit einer an das Material anpassbaren, jedoch mit mindestens einer 200/min betragenden Drehzahl arbeiten, das Material in unterschiedlichen Mengen einstellbar chargenweise eingetragen, mit einer einstellbaren Zeitdauer behandelt und anschließend aus dem Mahlraum wieder ausgetragen wird,
wobei das rotierende Mahlwerk mit ein- oder mehrfach ausgeführten, auf einer Antriebswelle (8) in Achsrichtung hintereinander angeordneten, propellerartigen Schlagelementen (7) Schlagflügeln (7) zur Auftrennung des Textilgutes in faserige Bestandteile ausgestattet ist,
**dadurch gekennzeichnet, dass** die Schlagflügel (7) für eine besonders schonende Materialbehandlung elastisch rückfedernd oder wegklappend angeordnet sind und damit kurzzeitig sporadisch während der Behandlung auftretenden Materialanhäufungen ausweichen können und besonders materialschädigende Belastungsspitzen vermieden werden.

2. Vorrichtung nach Anspruch 1, **dadurch gekennzeichnet, dass** die Materialbefüllung kontinuierlich in einen Vorratsraum der Vorrichtung erfolgt, der über eine
zeitintervallgesteuerte Klappvorrichtung den Mahlraum chargenweise befüllt und der Materialaustrag ebenfalls über zeitintervallgesteuerte Materialaustragsklappen vorgenommen wird.

3. Vorrichtung nach Anspruch 1 oder 2, **dadurch gekennzeichnet, dass** die materialzu- und abfuhrbegrenzenden Klappen perforiert sind.

4. Vorrichtung nach einem der Ansprüche 1 bis 3, **dadurch gekennzeichnet, dass** der Materialaustrag in eine pneumatisch saugende Rohrleitung erfolgt.

5. Vorrichtung nach einem der Ansprüche 1 bis 4, **dadurch gekennzeichnet, dass** Befüllungszeitintervall, Behandlungszeitintervall und Materialaustragsintervall frei eingestellt werden können.

6. Vorrichtung nach einem der Ansprüche 1 bis 5, **dadurch gekennzeichnet, dass** die Oberfläche des Statorgehäuses mit unterschiedlichen Wandaufrauhungen auslegbar gestaltet bzw. mit wechselbaren in den Totraum hineinragenden, nicht schneidend wirkenden Zusatzelementen wahlweise ausgestattet werden kann.

## Claims

1. A device for mechanically splitting finite textile fiber bundles consisting of n individual fibers (n ≥ 2) in fiber bundles with fewer than n individual fibers and/or individual fibers, with said device featuring an outwardly sealed milling chamber that contains one or more dead spaces amounting to at least 10% of the milling chamber volume and in which one or more rotating striking mechanisms operate in a non-cutting fashion with a rotational speed that can be adapted to the material, but amounts to at least 200/min so as to reduce load peaks, and with the material being adjustably input into said milling chamber batch-by-batch in different quantities, treated over an adjustable duration and then once again discharged from the milling chamber,
wherein the rotating milling mechanism is equipped with single or multiple propeller-like striking elements (7)/striking blades (7) that are arranged on a driveshaft (8) behind one another in the axial direction in order to separate the textile material into fibers components,
**characterized in that** the striking blades (7) are arranged in an elastically resilient or fold-away fashion and therefore able to briefly yield to sporadically occurring material accumulations during the treatment such that particularly material-damaging load peaks can be prevented and a particularly gentle treatment of the material can be achieved.

2. The device according to Claim 1, **characterized in that** the material input takes place continuously in a supply chamber of the device that fills the milling chamber batch-by-batch with the aid of a time interval-controlled shutter device, and **in that** the material discharge is likewise carried out with the aid of time interval-controlled material discharge shutters.

3. The device according to Claim 1 or 2, **characterized in that** the shutters for limiting the material input and the material discharge are perforated.

4. The device according to one of Claims 1 to 3, **characterized in that** the material discharge takes place in a pneumatic suction pipeline.

5. The device according to one of Claims 1 to 4, **characterized in that** the input time interval, the treatment time interval and the material discharge interval are freely adjustable.

6. The device according to one of Claims 1 to 5, **characterized in that** the surface of the stator housing with differently roughened wall sections may be selectively realized in an extendable fashion or equipped with exchangeable auxiliary elements that protrude into the dead space and operate in a non-cutting fashion.

## Revendications

1. Dispositif de scission mécanique de faisceaux de fibres textiles de longueur définie, composés de n fibres individuelles (n ≥ 2) en faisceaux de fibres comportant moins de n fibres individuelles et/ou fibres individuelles, dans lequel, dans une cellule de broyage fermée sur l'extérieur qui présente une ou plusieurs cellules mortes représentant au moins 10 % du volume de la cellule de broyage et dans lequel un ou plusieurs batteurs rotatifs fonctionnent sans couper, en réduisant les pointes de charge à une vitesse de rotation adaptable au matériau mais s'élevant au moins à 200/min, le matériau est incorporé par lots réglables de quantités différentes, est traité pendant une durée réglable puis est de nouveau évacué de la cellule de broyage,
le broyeur rotatif étant équipé d'éléments batteurs (7)/pales batteuses (7) ressemblant à des hélices de type simple ou multiple disposés successivement sur un arbre moteur (8) dans le sens de l'axe pour diviser le produit textile en composants fibreux,
**caractérisé en ce que** les pales batteuses (7) sont disposées de manière à avoir une résilience élastique ou à se rabattre pour traiter le matériau en le ménageant particulièrement et qu'ainsi des accumulations de matériau survenant brièvement et sporadiquement pendant le traitement peuvent s'échapper et que les pointes de charge particulièrement dommageables au matériau sont évitées.

2. Dispositif selon la revendication 1, **caractérisé en ce que** le remplissage avec du matériau a lieu en continu dans une cellule de réserve du dispositif qui, à l'aide d'un dispositif à volet commandé avec des intervalles chronologiques, remplit par lots la cellule de broyage et que l'évacuation du matériau est également effectuée par des volets d'évacuation commandés avec des intervalles chronologiques.

3. Dispositif selon la revendication 1 ou 2, **caractérisé en ce que** les volets limitant l'apport et l'évacuation de matériau sont perforés.

4. Dispositif selon une des revendications 1 à 3, **caractérisé en ce que** l'évacuation de matériau se fait dans une conduite tubulaire à aspiration pneumatique.

5. Dispositif selon une des revendications 1 à 4, **caractérisé en ce que** l'intervalle chronologique de remplissage, l'intervalle chronologique de traitement et l'intervalle chronologique d'évacuation de matériau peuvent être réglés à volonté.

6. Dispositif selon une des revendications 1 à 5, **caractérisé en ce que** la surface du boîtier du stator peut être réalisée avec diverses rugosités de paroi ou équipée facultativement d'éléments complémentaires échangeables dépassant dans la cellule morte et n'ayant pas d'effet coupant.
